# EUROPÄISCHE PATENTSCHRIFT

(11) **EP 0 625 653 B1**
(45) Veröffentlichungstag und Bekanntmachung des Hinweises auf die Patenterteilung: **06.09.1995**
(21) Anmeldenummer: 94250136.2
(22) Anmeldetag: 19.05.1994
(51) Int. Cl.: F16H 7/08, F16H 55/16, F16H 7/12

(54) **Selbsttätiges Spann- und Dämpfungselement für Endloskettentriebe, insbesondere Rollenkettentriebe**
Automatic tensioning and damping element for an endless chain transmission, particularly for a roller type chain transmission
Elément automatique de tension et d'amortissement pour une transmission à chaîne sans fin, en particulier pour transmission à chaîne à rouleaux

(30) Priorität: 21.05.1993 DE 4317033
(43) Veröffentlichungstag der Anmeldung: 23.11.1994
(73) Patentinhaber: EBERT, Siegfried, D-04509 Freiroda (DE); EBERT, Ilona, D-04509 Freiroda (DE)
(72) Erfinder: EBERT, Siegfried, D-04509 Freiroda (DE); EBERT, Ilona, D-04509 Freiroda (DE)
(74) Vertreter: Köhler, Tobias, Dipl.-Ing.(FH)

(56) Entgegenhaltungen:
- DD-A- 275 166
- FR-A- 2 379 736
- US-A- 1 567 494

## Beschreibung

Die Erfindung betrifft ein selbsttätiges Spann- und Dämpfungselement für Endloskettentriebe, insbesondere Rollenkettentriebe. Seine Anwendung ist universell für diametral zu spannende Kettentriebe.
Aus dem DD 275 166 A3 ist ein selbsttätiges Spann- und Dämpfungselement bekannt. Dabei handelt es sich um ein zwischen der Form eines konzentrischen Ringes und der Form einer Cassinischen Kurve mit ellipsenähnlicher Gestalt elastisch verformbaren, zur Kette formpaarigen achslosen Ring aus elastischem Werkstoff. Dieses Spann- und Dämpfungselement wird zwischen den Trumen des Kettentriebes angeordnet, greift mit seinem Zahnkranz in diese ein, sichert damit selbsttätig seine Lage im Kettentrieb und spannt diametral. Es rollt kettengeschwindigkeitssynchron zwischen den bewegten Trumen.
Kettenlängungen werden ausgeglichen, indem das vorgespannte Spann- und Dämpfungselement die Form eines konzentrischen Ringes anstrebt, wobei sich der Abstand der Nebenscheitelpunkte durch das Symmetriezentrum maximal bis zum Durchmesser des konzentrischen Ringes vergrößert. Zum Dämpfen von Belastungsspitzen erfolgt diese Funktion entgegengesetzt durch Verringern des Abstandes der Nebenscheitelpunkte.
Vorteilhafterweise sind derartige Spann- und Dämpfungselemente aus Werkstoffen mit nichtlinearen elastischen, visko-elastischen und plastischen Verformungsparametern hergestellt. Der Zahnkranz des Elementes ist formpaarig zur Kette und entspricht den Zahnformen von Kettenrädern.

Der Nachteil dieses bekannten selbsttätigen Spann- und Dämpfungselementes besteht darin, daß es während des Betriebszustandes im höheren Belastungsniveau, insbesondere bei hohen Drehzahlen und großen Rückstellwegen infolge großer voreingestellter Spannwegreserve, sowie bei hohen Kettentemperaturen erhöhter Wärmealterung unterliegt.
Damit werden die zulässige Belastung und die Standzeit begrenzt.
Die technische Ursache dieses Nachteils besteht darin, daß mit zunehmender Belastung im Ringteil über die elastischen Verformungsanteile hinaus Verformungsenergie aus zeitabhängigen, reversiblen visko-elastischen sowie plastischen Verformungsanteilen zu Wärme umgewandelt und daß über den Kontakt des Zahnkranzes mit der betriebswarmen Kette Wärme in das Ringteil eingeleitet wird. Der Wärmetausch zur Umgebung ist bei der höheren Belastung nicht ausreichend.
Die daraus folgende Temperaturerhöhung des selbsttätigen Spann- und Dämpfungselementes führt zur zeitweiligen Verringerung von Elastizitätsmodul und Schubmodul des Werkstoffes; für die Dauer der erhöhten Temperatur werden die elastischen Verformungsanteile temperaturabhängig verringert und für die weitere Dehnung/Streckung werden erhöht die visko-elastischen und plastischen Verformungsanteile benötigt.
Diese Verformungsanteile stellen sich im Gegensatz zum elastischen Verformungsanteil zeitabhängig weniger selbst bzw. nicht selbst zurück, benötigen dazu Rückstellenergie aus der Drehbewegung des Spann- und Dämpfungselementes und bewirken ihrerseits dessen beschleunigte verformungsbedingte Erwärmung und Verschlechterung der mechanischen Eigenschaften.
Die sich hierbei einstellende Gleichgewichtstemperatur zwischen Wärmeentwicklung, Wärmeeinleitung durch den Kettenkontakt und Wärmetausch zur Umgebung kann hierbei in einem Temperaturbereich liegen, der eine beschleunigte Wärmealterung des Werkstoffes des Spann- und Dämpfungselementes bedingt.

Die technische Aufgabe der Erfindung ist es, ein selbsttätiges Spann- und Dämpfungselement für Endloskettentriebe, insbesondere Rollenkettentriebe, zu schaffen, das einen verbesserten Wärmetausch und damit eine verbesserte Belastbarkeit und Standzeit aufweist.

Die technische Aufgabe wird gelöst durch die kennzeichnenden Merkmale des Patentanspruchs 1.

Die mit der Erfindung hauptsächlich erzielten Vorteile sind darin zu sehen, daß das selbsttätige Spann- und Dämpfungselement
höhere Belastbarkeit und größere Standzeit aufweist. Das fußkreisinnenseitig umlaufende Ringprofil ist das Arbeitsorgan des selbsttätigen Spann und Dämpfungselementes.
Es realisiert die Funktionen der Spannkraftentwicklung und der Dämpfung.
An der Verformung dieses Arbeitsorgans während der Rotation des Spann- und Dämpfungselementes nehmen die Sektoren unter den Zähnen und die Sektoren unter dem Rollenbett infolge gleicher Biegequerschnitte gleichwertig sowie die Sektoren in den Übergängen Zahn/Rollenbett infolge geringfügig größeren Biegequerschnittes nur geringfügig weniger teil.
Die damit bewirkte nahezu gleichmäßige Verteilung der Verformungsarbeit auf das Arbeitsorgan führt auch bei großer Spannwegvoreinstellung in jedem Sektor zu Verformungsbeträgen, die innerhalb der Elastizitätsgrenze des elastischen Werkstoffes liegen. Die elastische Hysteresen dieser Lastwechsel weisen sehr kleine viskoelastische und plastische Verformungsanteile, damit sehr kleine Verlustarbeit und damit sehr kleine Wärmearbeit auf.
Der Zahnkranz ist das Lagesicherungs- und Antriebsorgan des selbsttätigen Spann- und Dämpfungselementes.
Die offenen, elastisch verformbaren Zähne haben gegenüber dem der Spannkrafterzeugung und Dämpfung dienenden fußkreisinnenseitig umlaufende Ringprofil einen sehr kleinen Biegewiderstand.

Ihre Verformung hat nur eine geringe Rückwirkung auf die Verformung des Ringprofils.
Die offenen, elastisch verformbaren Zähne des Zahnkranzes sind während der Drehbewegung von Kühlmedien außen- und innenseitig anströmbar; es erfolgt dabei ein besserer Wärmetausch.
Die außerhalb der neutralen Biegelinie des Rinprofils liegenden Rollenbetten des gespannten Spann- und Dämpfungselementes werden beim Durchlaufen der Nebenscheitelphasen verformt. Sie vollziehen dabei eine Art Schließbewegung.
Der einem Faltmechanismus ähnliche Verformungsablauf der bogenförmigen Zähne während der Drehbewegung führt vorteilhaft zum Ausgleich der Schließbewegung der Rollenbetten während des Ketteneingriffes; bei der Schließbewegung der Rollenbetten legen sich die elastischen Zähne an die Rollen der Kette an und kompensieren gleichzeitig mit eigener Faltbewegung die schließbedingte Verringerung des Abstandes der Bogenfußpunkte 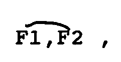
gemessen auf dem Fußkreis. Zugleich werden die Kontaktflächen Rolle/Rollenbett vergrößert, die zahnnahen Bereiche des Rollenbettes nehmen Anteile der Rollenbettpressung auf und entlasten damit die grundnahen Bereiche des Rollenbettes. Der grundnahe Bereich des Rollenbettes wird wegen der somit verringerten Druckbelastung vom kontakt- und reibungsbedingten Wärmeübergang aus der Kette entlastet; dieser Wärmeübergang wird auf die offenen, besser wärmetauschfähigen Zähne verlagert.

Eine vorteilhafte Ausgestaltung der Erfindung ist in den Ansprüchen 2 bis 4 angegeben.

Die Weiterbildung nach Anspruch 2 ermöglicht einen vorteilhaften Wärmetausch des Ringprofils über die auch während des Ketteneingriffes seitlich anströmbaren Freiflächen am Ringprofil.

Die Weiterbildung nach Anspruch 3 ermöglicht einen vorteilhaften Wärmetausch des Zahnkranzes über die auch während des Ketteneingriffes seitlich anströmbaren Freiflächen am Zahnkranz.
Die Weiterbildung nach Anspruch 4 ermöglicht einen vorteilhaften, zur Kette ausreichend greiffähig korrespondierenden Zahnkranz.
Es ergibt sich eine Zahnform, bei der der Rollenbettradius an seinen vom Rollenbettwinkel β < 150° begrenzten Endpunkten direkt in den Zahnkopfbogen wendet. Eine sonstüblich ausgeprägte Zahnflanke ist daher nich vorhanden.
Es entfällt somit die kettenkontaktbedingte Wärmeeinleitung über die üblichen Zahnflanken.
Wegen der überwiegend diametralen Belastung der Rollenbetten ist eine funktionsgemäß ausreichende Greiffähigkeit des Zahnkranzes gegeben.

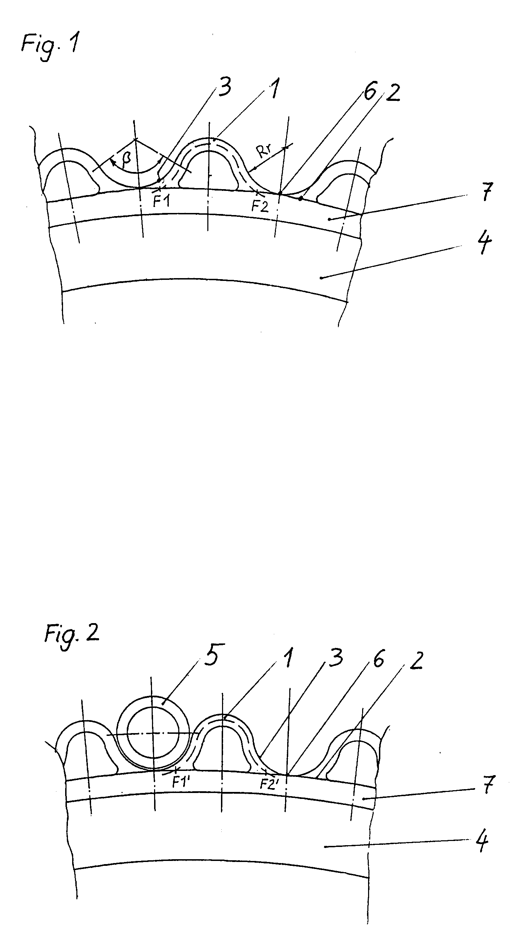

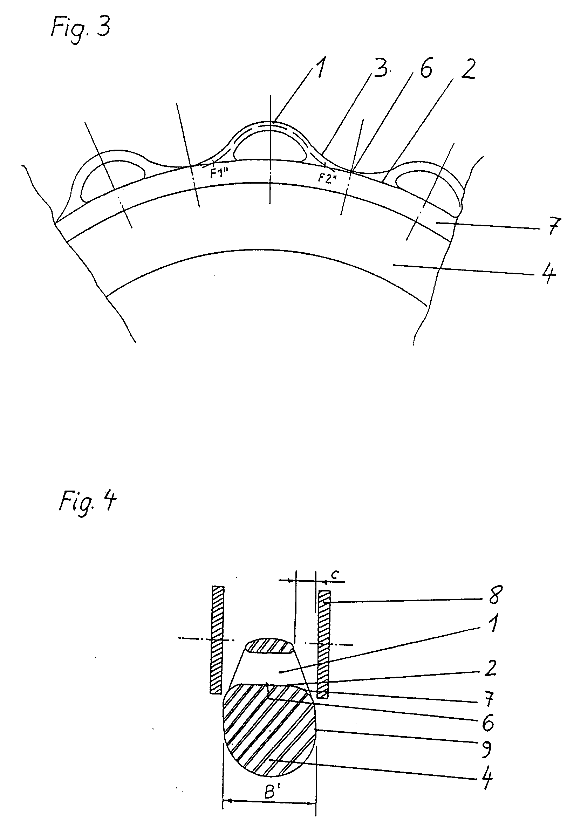

Nachfolgend wird ein Ausführungsbeispiel erläutert. Die zugehörigen Zeichnungen zeigen:
- Fig. 1:: Seitenansicht eines Ausschnittes des Spann -und Dämpfungselementes in spannungsfreier Ausgangsstellung
- Fig. 2:: Seitenansicht eines Ausschnittes des Spann -und Dämpfungselementes im gespannten Zustand mit gestauchter Biegeposition der Zähne, wie sie während des Ketteneingriffs in den Nebenscheitelphasen vorliegt
- Fig. 3:: Seitenansicht eines Ausschnittes des Spann -und Dämpfungselementes im gespannten Zustand in gestreckter Biegeposition der Zähne, wie sie während des Ketteneingriffs in den Hauptscheitelphasen vorliegt
- Fig. 4:: Schnitt durch Zahnkopf und Kettenlaschen während des Ketteneingriffs
Wie aus Fig. 1 ersichtlich, besteht das Spann- und Dämpfungselement aus einem fußkreisinnenseitigen, unter den Zähnen 1 des Zahnkranzes freiliegenden, sich über seine Mantelfläche 2 mit den Rollenbetten 3 des Zahnkranzes im Fußkreis ineinanderverlaufendes Ringprofil 4 sowie dem Zahnkranz mit um ihre spannungsfreie Ausgangsstellung elastisch verformbaren, seitlich offenen, vorteilhafterweise bogenförmigen Zähnen.
Der von der Mantelfläche 2 bestimmte äußere Durchmesser des Ringprofils 4 liegt auf dem Fußkreisdurchmesser des Zahnkranzes.
Das Ringprofil realisiert über seine elastischen, viskoelastischen und plastischen Parameter die Funktionen der Spannkraftentwicklung und der Dämpfung.
Die Sektoren unter den Zähnen als auch die Sektoren unter den Rollenbetten und die Sektoren in den Übergängen Zahn/Rollenbett haben bezüglich ihrer Form und Flächengröße gleiche bzw. annähernd gleiche Querschnitte.
An der Verformung während der Rotation des Spann- und Dämpfungselementes nehmen wegen des damit annähernd gleichen Biegewiderstandes sowohl die Sektoren unter den Zähnen als auch die Sektoren unter den Rollenbetten und die Sektoren in den Übergängen Zahn/Rollenbett gleichwertig bzw. annähernd gleichwertig teil.
Die damit bewirkte gleichmäßige Verteilung der Verformungsarbeit auf den gesamten Umfang des Ringprofiles verhindert Verformungskonzentrationen und führt auch bei großer Spannwegvoreinstellung in jedem Sektor zu Verformungsbeträgen, die unter der Elastizitätsgrenze des Werkstoffes liegen.
Der Zahnkranz realisiert die Funktionen der Lagesicherung und des Antriebes.
Im ungespannten Zustand des Spann- und Dämpfungselementes nehmen die Zähne eine spannungsfreie Ausgangsstellung mit dem auf dem Fußkreis gemessenen Bogenfußpunktabstand 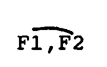
ein. Im gespannten, wie in Fig. 2 dargestellten Zustand, hier liegt eine ellipsenähnliche Gestalt des Spann- und Dämpfungselementes vor, sind die Zähne im Bereich der Nebenscheitelphase mit Ketteneingriff, ähnlich einem Faltmechanismus auf den Bogenfußpunktabstand 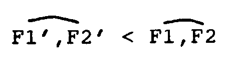
gestaucht.
Dagegen sind sie, wie in Figur 3 dargestellt, im Bereich der Hauptscheitelphase ohne Ketteneingriff, auf den Bogenfußpunktabstand 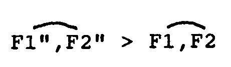
gestreckt.
Die von den Bogenfußpunkten F1;F2 durch den Zahnkopf verlaufende Biegelinie 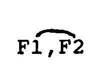
weist in spannungsfreier Ausgangsstellung und in allen Verformungsphasen eine größere Länge auf als der auf dem Fußkreis bei größter Streckung in der Hauptscheitelphase vorliegende Bogenfußpunktabstand 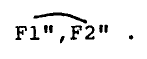
Damit bleiben die Zähne auch bei größter Streckung offen und können vom Kühlmedium durchströmt und gekühlt werden.

Während der Drehbewegung des Spann- und Dämpfungselementes erfolgt zyklisch für jeweils 180° Drehwinkel eine Zahnverformung mit Extremwerten bei jeweils 90° Drehwinkel. Die außerhalb der neutralen Biegelinie des Ringprofils liegenden Rollenbetten 3 des gespannten spann- und Dämpfungselementes werden beim Durchlaufen der Nebenscheitelphasen ebenfalls verformt. Sie vollziehen dabei eine Art Schließbewegung.
Synchron zu dieser Schließbewegung des Rollenbettes erfolgt die elastische Verformung der Zähne; diese legen sich an die jeweilige Mantelfläche der Kettenrolle 5 an. Dabei kompensieren sie die Rollenbettschließung und stellen den Formschluß zwischen Rollenbett 3 und Rolle 5 für eine größere Fläche ein.
Über diese größere Fläche der Rollenbettpressung wird das Rollenbett im Rollenbettgrund 6 druckentlastet und der kettenkontaktbedingte Wärmeübergang mit der Folge thermischer Entlastung des Rollenbettes verringert.

Aus Fig. 4 ist ersichtlich, daß die gerundeten Freiflächen 7 des Ringprofils bis außerhalb des Kreises des Übergriffs der Kettenlaschen 8 in die Ringseitenflächen 9 reichen. Im Zusammenwirken mit den beidseitigen Zahnbreitenabfasungen um den Betrag c sind damit auch während des Ketteneingriffs tangential und zentrifugal gerichtete Kühlmittelströmungen zu den Rollenbetten sowie auf und unter die Zähne mit der Wirkung eines verbesserten Wärmetausches möglich.
Der Kopfkreisdurchmesser des Zahnkranzes ist kleiner als dessen Teilkreisdurchmeser. Daraus ergibt sich eine Zahnform, bei der der Rollenbettradius an seinen vom Rollenbettwinkel β < 150° begrenzten Endpunkten direkt in den Zahnkopfbogen wendet.
Wegen der überwiegend diametralen Belastung der Rollenbetten im Ketteneingriff ist eine funktionsgemäß ausreichende Greiffähigkeit des Zahnkranzes gegeben.
Zugleich wird infolge der Zahnform ohne ausgeprägte Zahnflanke die kettenkontaktbedingte Wärmeeinleitung verringert und darüber hinaus ein günstiges Eingreifen und Auslaufen des Zahnkranzes in die Trume bzw. aus den Trumen ermöglicht.

## Patentansprüche

1. Selbsttätiges Spann- und Dämpfungselement für Endloskettentriebe, insbesondere Rollenkettentriebe, welches als elastisch verformbares Element zwischen Leertrum und Lasttrum angeordnet ist, ständig auf beide Trume gleichzeitig wirkt, und aus einem zwischen der Form eines konzentrischen Ringes oder dessen radialen Verformungsvariationen und der Form einer Cassinischen Kurve mit ellipsenähnlicher Gestalt verformbaren Ring mit außenliegendem, zur Kette greiffähig korrespondierenden Zahnkranz, dessen Teilkreisdurchmesser oder kleinste Achse größer ist als der Teilkreisdurchmesser des größten Kettenrades des Kettentriebes, gekennzeichnet durch einen Zahnkranz mit um ihre spannungsfreie Ausgangsstellung elastisch verformbaren, seitlich offenen, die Form eines Bogens aufweisenden Zähnen (1) sowie ein fußkreisinnenseitig umlaufendes, mit den Rollenbetten (3) des Zahnkranzes im Fußkreis ineinanderverlaufendes Ringprofil (4).

2. Selbsttätiges Spann- und Dämpfungselement nach Anspruch 1, dadurch gekennzeichnet, daß das Ringprofil (4) vom Fußkreisdurchmesser beginnende, bis außerhalb des Kreises des Kettenlaschenübergriffs in die Ringseitenflächen (9) reichende, von der Ringprofilbreite B' zurückgesetzte Freiflächen (7) aufweist.

3. Selbsttätiges Spann- und Dämpfungselement nach den Ansprüchen 1 oder 2, gekennzeichnet durch Rollenbettbreiten B' < 0,9*B der Rollenbetten (3), bezogen auf die zugehörige Ketteninnenbreite B, und beidseitig vom Fußkreis ausgehende Zahnbreitenabfasungen c > 0,25 B', bezogen auf die zugehörige Ketteninnenbreite B.

4. Selbsttätiges Spann- und Dämpfungselement nach einem der Ansprüche 1 bis 3, dadurch gekennzeichnet, daß der Kopfkreisdurchmesser des Zahnkranzes kleiner ist als der Teilkreisdurchmesser und die Rollenbetten (3) des Zahnkranzes Rollenbettwinkel β < 150° aufweisen.

## Claims

1. Automatic tensioner and damper for endless chain drives, particularly roller-chain drives, having an elastically deformable element situated between their slack runs and their tensioned runs that constantly and simultaneously acts on both of said runs, and consisting of a deformable ring having a shape intermediate between that of an annulus or variations thereof created by radially deforming same, and a roughly elliptical ring in the form of a Cassini oval, having peripheral external teeth mating to, and capable of gripping, their chains, whose pitch-circle diameter or shortest axis exceeds the diameter of the pitch circle of the largest sprocket of said chain drive, characterized by peripheral, unflanked, curved teeth (1) that are elastically deformable from their unstressed initial position, and by a circumferential annular profile (4) running inside its root circle and merging into the roller lands (3) of said peripheral teeth at their root circle.

2. Automatic tensioner and damper per Claim 1, characterized by the fact that said annular profile (4) exhibits clearways (7) inset from its lateral centerline, B', extending from said root circle to points outside the circle defined by the depth of penetration of chain links into its lateral surfaces (9).

3. Automatic tensioner and damper per Claims 1 or 2, characterized by roller lands (3) of width B' < 0.9 B, where B is the inside width of their associated chain, and by beveled surfaces of width c > 0.25 B', referenced to said inside width, B, of said associated chain, on both faces of their teeth, extending outward from the root circle of same.

4. Automatic tensioner and damper per any of Claims 1 through 3, characterized by the fact that the diameter of the addendum circle of said peripheral teeth is less than that of their pitch circle, and that said roller lands (3) are inclined at an angle of β < 150°.

## Revendications

1. Elément automatique de tension et d'amortissement pour les transmissions par chaîne sans fin, particulièrement pour les transmissions par chaîne à rouleaux, placé comme élément élastique déformant entre le brin à vide et le brin en tension, agissant en permanence sur les deux brins, et composé d'une bague déformante ayant une forme variant entre celle d'une bague concentrique - ou celle de ses variations radiales de déformations - et la forme d'une cassinoïde à forme ellipsoïde, bague munie d'une couronne dentée externe engrenant sur la chaîne correspondante dont le diamètre primitif de référence - ou le petit axe - est plus grand que le diamètre primitif de référence de la plus grande roue dentée de la transmission par chaîne, caractérisé par une couronne dentée munie de dents (1) élastiques déformantes, ouvertes sur le côté, présentant la forme d'un arc et placées autour de sa position initiale hors tension ainsi qu'une bague profilée (4) parcourant le diamètre de pied interne et s'engrenant dans les lits des rouleaux (3) de la couronne dentée.

2. Elément automatique de tension et d'amortissement conforme à la revendication 1., caractérisé par le fait que la bague profilée (4) présente des surfaces libres (7) sur sa largeur B' commençant par le diamètre de pied jusqu'à l'extérieur du cercle de la patte de la chaîne et allant jusque dans les surfaces latérales de la bague (9).

3. Elément automatique de tension et d'amortissement conforme aux revendications 1 ou 2, caractérisé par des largeurs de lits de rouleaux B' < 0,9 *B des lits de rouleaux (3), se référant à la largeur interne B de la chaîne en question et des chanfreins de la largeur de dent c > 0,25 B' partant des deux côtés du cercle de pied, en se référant à la largeur interne D de la chaîne en question.

4. Elément automatique de tension et d'amortissement conforme à l'une des revendications 1 à 3, caractérisé par le fait que le diamètre de tête de la couronne dentée est inférieur au diamètre primitif de référence et par le fait que les lits de rouleaux (3) de la couronne dentée présentent un angle de lit de rouleaux β < 150°
